(19) Europäisches Patentamt
European Patent Office
Office européen des brevets

(11) EP 4 130 197 B1

(12) **EUROPEAN PATENT SPECIFICATION**

(45) Date of publication and mention of the grant of the patent:
**01.10.2025 Bulletin 2025/40**

(21) Application number: **21779179.7**

(22) Date of filing: **31.03.2021**

(51) International Patent Classification (IPC):
***C09K 21/12*** *(2006.01)* ***C08K 5/49*** *(2006.01)*
***C08K 5/527*** *(2006.01)*

(52) Cooperative Patent Classification (CPC):
(C-Sets available)
**C09K 21/12; C08K 5/34928; C08K 5/527;**
**C08K 5/529;** C08K 3/013; C08K 3/346; C08K 5/005;
C08K 5/0066; C08K 5/098 (Cont.)

(86) International application number:
**PCT/JP2021/013788**

(87) International publication number:
**WO 2021/201085 (07.10.2021 Gazette 2021/40)**

(54) **FLAME RETARDANT COMPOSITION, FLAME-RESISTANT SYNTHETIC RESIN COMPOSITION, AND MOLDED BODY**

FLAMMHEMMENDE ZUSAMMENSETZUNG, FLAMMHEMMENDE KUNSTHARZZUSAMMENSETZUNG UND FORMKÖRPER

COMPOSITION IGNIFUGE, COMPOSITION DE RÉSINE SYNTHÉTIQUE RÉSISTANTE AUX FLAMMES, ET CORPS MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2020 JP 2020063979**

(43) Date of publication of application:
**08.02.2023 Bulletin 2023/06**

(73) Proprietor: **ADEKA CORPORATION**
**Arakawa-ku**
**Tokyo**
**116-8554 (JP)**

(72) Inventors:
- **BANNO, Keisuke**
  **Saitama-shi, Saitama 336-0022 (JP)**
- **MITSUHASHI, Ayaka**
  **Saitama-shi, Saitama 336-0022 (JP)**
- **TANJI, Naoko**
  **Saitama-shi, Saitama 336-0022 (JP)**

(74) Representative: **Gill Jennings & Every LLP**
**The Broadgate Tower**
**20 Primrose Street**
**London EC2A 2ES (GB)**

(56) References cited:
**EP-A1- 3 424 993**
**WO-A1-2017/150662**
**WO-A1-2019/045013**
**WO-A1-2019/045013**
**JP-A- 2008 208 269**
**JP-A- 2008 208 269**
**JP-A- H11 349 740**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/527, C08L 23/12;**
**C08K 5/529, C08L 23/12**

## Description

TECHNICAL FIELD

The present invention relates to a flame retardant composition that can provide a flame-retardant synthetic resin composition (hereinafter, also simply referred to as "resin composition") which has excellent flame retardance and which is excellent in shrinkage balance during molding, and a flame-retardant synthetic resin composition using the same and a molded body thereof.

BACKGROUND ART

Synthetic resins have the advantage of being not only excellent in molding processability, heat resistance, dynamic characteristics, and the like, but also low in specific gravity and light in weight, and thus have been conventionally used widely in, for example, building materials, automobile components, packaging materials, agricultural materials, housing materials for household appliances, and toys.

However, many synthetic resins are combustible substances and are necessary to be made flame-retardant depending on applications. In particular, synthetic resins having high combustibility, including polyolefin resins, are heavily used in a wide range of fields, and it is necessary to compound flame retardants for the purpose of imparting flame retardance to these resins.

While various types of flame retardants are known as flame retardants for synthetic resins, in particular, an intumescent-based flame retardant mainly containing a salt of polyphosphoric acid or pyrophosphoric acid and a nitrogen-containing compound is known as an excellent flame retardant that makes synthetic resins flame-retardant by forming a surface expansion layer (Intumescent) during combustion and suppressing diffusion of a decomposed product and/or heat transfer. Such a flame retardant is described in, for example, Patent Document 1.

In order that the intumescent-based flame retardant is improved in powder characteristics and processability, and in resin properties when compounded to a resin, there have been proposed, for example, addition of a higher aliphatic carboxylate or the like, and addition of silicone oil or a silane coupling agent (Patent Documents 2 to 4).

Patent Document 5 discloses a resin additive composition composed of a phosphoric acid ester compound, a thermoplastic resin composition containing the same, and a molded article thereof. Patent Document 6 dislcoses a composition containing a cyclic organophosphate aluminium salt and sodium carboxylate, a thermoplastic resin composition that uses the same, and a molded article thereof. Patent Document 7 dislcoses a synthetic resin composition including a phosphate ester compound as a crystallisation agent.

RELATED ART DOCUMENTS

PATENT DOCUMENTS

[Patent Document 1] US2003/0088000A
[Patent Document 2] US2005/0256234A
[Patent Document 3] US2007/0176154A
[Patent Document 4] JP2008-208269A
[Patent Document 5] EP3424993A1
[Patent Document 6] WO2019/045013A1
[Patent Document 7] JPH11349740A

SUMMARY OF THE INVENTION

PROBLEMS TO BE SOLVED BY THE INVENTION

In injection molding processing of a synthetic resin, a molten resin with which a mold is filled is shrunk in volume when cooled and solidified. In general, such a molding shrinkage phenomenon is utilized and a cavity of a mold is fabricated at a dimension that is one size too large for the shrinkage, and thus a molded article having an intended dimension is obtained.

However, a problem is that, if the above flame retardant is compounded to a synthetic resin and injection molding is performed, the mold shrinkage factor in the MD direction (flow direction of the resin in a mold) is larger than the mold shrinkage factor in the TD direction (direction perpendicular to the MD direction). Thus, a molded body containing the

above flame retardant is changed in longitudinal and lateral balance in terms of mold shrinkage factor, as compared with a molded body not containing the above flame retardant, and a molded body having a shape as initially designed with a mold is difficult to obtain.

An object of the present invention for solving the above problems is to provide a flame retardant composition that can provide a flame-retardant synthetic resin composition excellent in flame retardance and in longitudinal and lateral balance in terms of mold shrinkage factor, and a flame-retardant synthetic resin composition using the same and a molded body thereof.

MEANS FOR SOLVING THE PROBLEMS

The present inventors have made intensive studies in order to solve the above problems, and as a result, have completed the present invention.

The flame retardant composition of the present invention is outlined in claim 1.

The flame retardant composition of the present invention preferably further contains at least one selected from a filler, a fatty acid metal salt and a hydrotalcite compound, as component (C). In this case, the fatty acid metal salt is more preferably a compound having a structure represented by the following general formula (2):

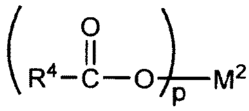

(2)

wherein $R^4$ represents a group derived from a linear or branched aliphatic organic acid having 8 to 30 carbon atoms, $M^2$ represents a metal atom or $Al(OH)_{3-p}$, and p represents an integer of 1 to 3.

Furthermore, the flame retardant composition of the present invention preferably further contains 0.01 to 5 parts by mass of at least one selected from the group consisting of silicone oil, an epoxy-based coupling agent and a lubricant based on 100 parts by mass of component (A), as component (E).

The flame-retardant synthetic resin composition of the present invention is a flame-retardant synthetic resin composition containing a synthetic resin and the flame retardant composition and satisfying relationships represented by the following expressions (i) and (ii):

$$\text{(i) } 0.935 \leq \Delta TD/\Delta TD_B \leq 1.065$$

$$\text{(ii) } 0.860 \leq (\Delta TD/\Delta MD)/(\Delta TD_B/\Delta MD_B) \leq 1.140,$$

in the expressions, $\Delta MD$ is a shrinkage factor in an MD direction as a flow direction of a resin in a mold cavity during injection molding, of a molded body obtained by injection molding of the flame-retardant synthetic resin composition, $\Delta TD$ is a shrinkage factor in a TD direction as a direction perpendicular to the MD direction, of the molded body obtained by injection molding of the flame-retardant synthetic resin composition, $\Delta MD_B$ is a shrinkage factor in the MD direction, of a molded body obtained by injection molding of a synthetic resin composition having a compositional ratio where the flame retardant composition is excluded from the flame-retardant synthetic resin composition, and $\Delta TD_B$ is a shrinkage factor in the TD direction, of the molded body obtained by injection molding of the synthetic resin composition.

The molded body of the present invention is obtained by molding the above flame-retardant synthetic resin composition.

EFFECTS OF THE INVENTION

According to the present invention, it is possible to obtain a flame retardant composition that can provide a flame-retardant synthetic resin composition excellent in flame retardance and in shrinkage balance during molding, and a flame-retardant synthetic resin composition using the same and a molded body thereof.

MODE FOR CARRYING OUT THE INVENTION

The present invention relates to a flame retardant composition, a flame-retardant synthetic resin composition and a molded body. Hereinafter, the present invention will be described with reference to preferred embodiments thereof.

<Flame retardant composition>

The flame retardant composition of the present invention essentially contains a phosphoric acid salt-based flame retardant as component (A) and one or more compounds each having a structure represented by general formula (1), as component (B).

(Component (A))

The phosphoric acid salt-based flame retardant used as component (A) in the flame retardant composition of the present invention includes a phosphoric acid compound.

Examples of the phosphoric acid compound used in the phosphoric acid salt-based flame retardant include, but not particularly limited to, various phosphoric acid compounds such as orthophosphoric acid, pyrophosphoric acid, and polyphosphoric acid. The polyphosphoric acid in the present invention means a so-called condensed phosphoric acid, and examples include linear polyphosphoric acid and cyclic polymetaphosphoric acid. The degree of condensation of the polyphosphoric acid is 3 or more.

Examples of the phosphoric acid salt-based flame retardant can include a phosphoric acid salt composed of any of the above various phosphoric acid compounds and at least one metal or compound selected from Group 1 to Group 14 metals in the periodic table, ammonia, an aliphatic amine and an aromatic amine.

Examples of the Group 1 to Group 14 metals in the periodic table include lithium, sodium, calcium, barium, iron (II), iron (III), aluminum, and zinc.

Examples of the aliphatic amine include methylamine, ethylamine, diethylamine, triethylamine, ethylenediamine, and piperazine.

Examples of the aromatic amine include pyridine, pyrazine, pyridazine, pyrimidine, triazine, melamine, melam, and melem.

A known treatment for an enhancement in water resistance, for example, a treatment with a silane coupling agent or covering with a melamine resin may be applied to the phosphoric acid salt-based flame retardant, or a known foaming aid such as melamine, melamine cyanurate, or pentaerythritol may be added thereto.

Specific examples of the phosphoric acid salt-based flame retardant include an orthophosphoric acid salt, a pyrophosphoric acid salt, and a polyphosphoric acid salt.

The orthophosphoric acid salt is not particularly limited, and examples thereof include ammonium salts such as ammonium phosphate, ammonium dihydrogen phosphate and diammonium hydrogen phosphate, sodium salts such as monosodium phosphate, disodium phosphate, trisodium phosphate, monosodium phosphite, disodium phosphite and sodium hypophosphite, potassium salts such as monopotassium phosphate, dipotassium phosphate, tripotassium phosphate, monopotassium phosphite, dipotassium phosphite and potassium hypophosphite, lithium salts such as monolithium phosphate, dilithium phosphate, trilithium phosphate, monolithium phosphite, dilithium phosphite and lithium hypophosphite, barium salts such as barium dihydrogen phosphate, barium hydrogen phosphate, tribarium phosphate and barium hypophosphite, magnesium salts such as magnesium monohydrogen phosphate, magnesium hydrogen phosphate, trimagnesium phosphate and magnesium hypophosphite, calcium salts such as calcium dihydrogen phosphate, calcium hydrogen phosphate, tricalcium phosphate and calcium hypophosphite, zinc salts such as zinc phosphate, zinc phosphite and zinc hypophosphite, and amine salts such as piperazine phosphate and melamine phosphate.

The pyrophosphoric acid salt is not particularly limited, and examples thereof include ammonium pyrophosphate, piperazine pyrophosphate, melamine pyrophosphate, and aluminum pyrophosphate.

The polyphosphoric acid salt is not particularly limited, and examples thereof include ammonium polyphosphate, piperazine polyphosphate, melamine polyphosphate, and aluminum polyphosphate.

The phosphoric acid salt-based flame retardant can be used singly or in combination of two or more kinds thereof.

The phosphoric acid salt-based flame retardant containing component (A) contains components (A-1), and (A-2) from the viewpoints of flame retardance and heat resistance. The phosphoric acid salt-based flame retardant containing component (A) preferably contains component (A-3) from the viewpoints of flame retardance and heat resistance.

Component (A-1): one or more melamine salts selected from the group consisting of melamine orthophosphate, melamine pyrophosphate and melamine polyphosphate.

Component (A-2): one or more piperazine salts selected from the group consisting of piperazine orthophosphate, piperazine pyrophosphate and piperazine polyphosphate.

Component (A-3): one or more ammonium salts selected from the group consisting of ammonium orthophosphate, ammonium pyrophosphate and ammonium polyphosphate.

The melamine salt used as component (A-1) in component (A) in the present invention is selected from the group consisting of melamine orthophosphate, melamine pyrophosphate and melamine polyphosphate, and these salts may be used singly or as a mixture thereof. In particular, melamine pyrophosphate or melamine polyphosphate is preferable and melamine pyrophosphate is particularly preferable from the viewpoints of flame retardance, handleability and storage

stability. When such a salt is used as a mixture thereof, a higher content rate of melamine pyrophosphate is more preferable.

While such a salt of a phosphoric acid compound and melamine can also be obtained by reacting a corresponding phosphoric acid compound or a salt of such a phosphoric acid compound with melamine, the melamine salt used as component (A-1) in the present invention is preferably melamine pyrophosphate or melamine polyphosphate obtained by heating and condensing melamine orthophosphate, and particularly preferably melamine pyrophosphate.

The piperazine salt used as component (A-2) in component (A) in the present invention is selected from the group consisting of piperazine orthophosphate, piperazine pyrophosphate and piperazine polyphosphate, and these salts may be used singly or as a mixture thereof. In particular, piperazine pyrophosphate is preferable from the viewpoints of flame retardance, handleability and storage stability, and when a mixture is adopted, a higher content rate of piperazine pyrophosphate is more preferable.

While such a salt of a phosphoric acid compound and piperazine can also be obtained by reacting a corresponding phosphoric acid compound or a salt of such a phosphoric acid compound with piperazine, the piperazine salt used as component (A-2) in the present invention is preferably piperazine pyrophosphate or piperazine polyphosphate obtained by heating and condensing piperazine diphosphate, and particularly preferably piperazine pyrophosphate.

The ammonium salt used as component (A-3) in component (A) in the present invention is selected from the group consisting of ammonium orthophosphate, ammonium pyrophosphate and ammonium polyphosphate, and these salts may be used singly or as a mixture thereof.

Since the ammonium salt as a single substance is easily hydrolyzed, not only the ammonium salt, which is covered or microcapsulated with a thermosetting resin, or the ammonium salt as a particle form, which is covered with, for example, a melamine monomer or other nitrogen-containing compound, can be suitably used, but also the ammonium salt, which is treated with, for example, a surfactant or a silicon compound such as a silane coupling agent or silicone oil, or the ammonium salt, which is made hardly soluble due to addition of melamine or the like in the course of production thereof, can be used.

Component (A) in the present invention contains components (A-1) and (A-2) from the viewpoint of flame retardance.

The content rate between components (A-1) and (A-2) is 30:70 to 45:55 in terms of the mass ratio between the components (A-1) and (A-2), from the viewpoint of flame retardance.

(Component (B))

Component (B) in the flame retardant composition of the present invention is a compound having a structure represented by the following general formula (1):

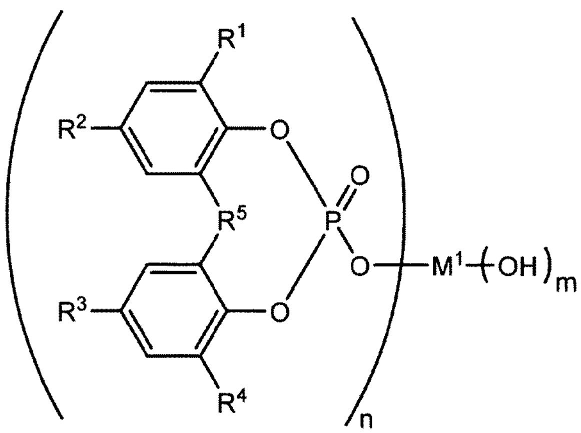

(1)

In the general formula (1), $R^1$, $R^2$, $R^3$ and $R^4$ each independently represent a hydrogen atom or an alkyl group having 1 to 8 carbon atoms, $R^5$ represents a direct bond or an alkanediyl group having 1 to 4 carbon atoms, $M^1$ represents lithium or aluminium, n is 1 and m is 0 when $M^1$ represents lithium, and n is 1, 2 or 3 and m is an integer represented by 3 - n when $M^1$ represents aluminum.

Examples of the alkyl group having 1 to 8 carbon atoms, each represented by $R^1$, $R^2$, $R^3$ and $R^4$ in the general formula (1), include a methyl group, an ethyl group, a propyl group, an isopropyl group, a butyl group, a sec-butyl group, a tert-butyl group, a pentyl group, a tert-pentyl group, a hexyl group, a heptyl group, an octyl group, a 2-ethylhexyl group, and a tert-octyl group. In particular, an alkyl group having 1 to 5 carbon atoms is preferable, and a tert-butyl group is particularly preferable, from the viewpoint of the effects of the present invention.

Examples of the alkanediyl group having 1 to 4 carbon atoms represented by $R^5$ in the general formula (1) include a methanediyl group, an ethan-1,1-diyl group, a propan-1,1-diyl group, a propan-2,2-diyl group, a butan-1,1-diyl group, and a butan-2,2-diyl group. In particular, a methanediyl group or an ethan-1,1-diyl group is preferable from the viewpoint of the effects of the present invention.

$M^1$ in the general formula (1) represents lithium or aluminum, from the viewpoint of the effects of the present invention.

Component (B) in the present invention can be used singly or in combination of two or more kinds thereof.

Specific examples of component (B) in the present invention, in which $M^1$ in the general formula (1) is lithium or aluminium, include the following Compounds No. 1 to No. 6. It is noted that component (B) in the present invention is not limited to these compounds.

Compound No. 1

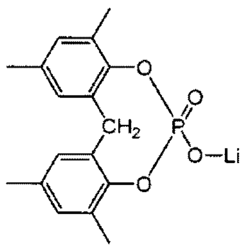

Compound No. 2

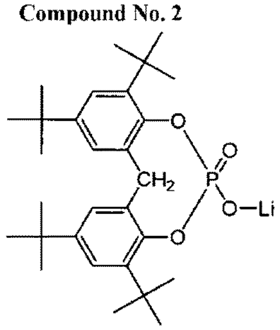

Compound No. 3

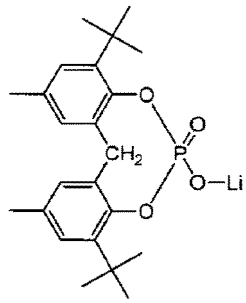

Compound No. 4

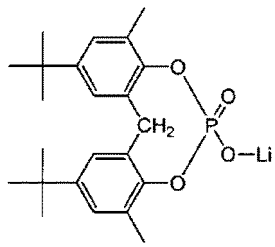

Compound No. 5

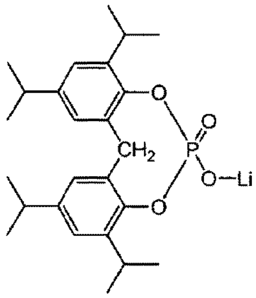

Compound No. 6

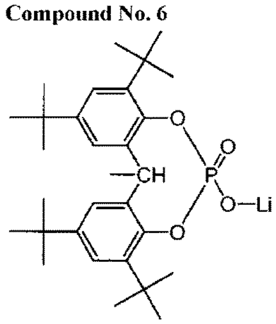

Compound No. 7

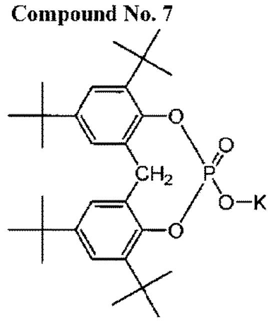

Compound No. 8

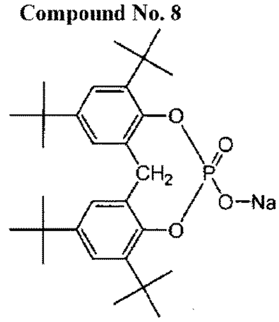

Specific examples thereof, in which $M^1$ in the general formula (1) is aluminum, include the following Compounds No. 13 to No. 17. It is noted that component (B) in the present invention is not limited to these compounds.

Compound No. 13

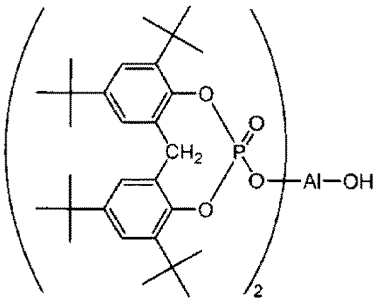

Compound No. 14

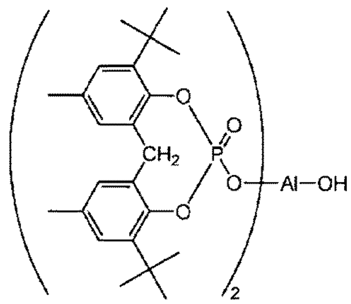

Compound No. 15

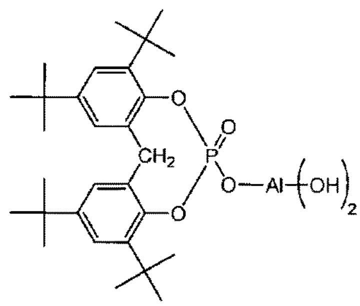

Compound No. 16

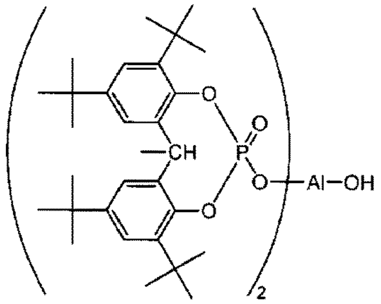

Compound No. 17

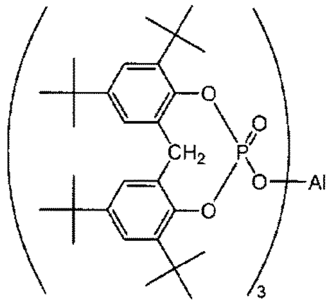

Component (B) in the present invention has the effect of allowing the ratio in longitudinal and lateral balance between respective mold shrinkage factors in a flow direction (MD direction) of a resin and in a direction (TD direction) perpendicular to the flow direction during injection molding of the resin composition to be close to 1, and thus suppressing warpage and deformation of a molded body.

The content of component (B) in the flame retardant composition of the present invention is preferably 0.005 to 5 parts by mass, more preferably 0.01 to 3 parts by mass, still more preferably 0.05 to 1 part by mass based on 100 parts by mass of component (A), from the viewpoints of flame retardance, and shrinkage balance during molding.

(Component (C))

The flame retardant composition of the present invention preferably contains at least one selected from a filler, a fatty acid metal salt and a hydrotalcite compound, as component (C), from the viewpoint that the effects of the present invention are more enhanced.

Examples of the filler can include talc, mica, calcium carbonate, calcium oxide, calcium hydroxide, magnesium carbonate, magnesium hydroxide, magnesium oxide, magnesium sulfate, aluminum hydroxide, barium sulfate, a glass powder, glass fiber, clay, dolomite, silica, alumina, potassium titanate whisker, wollastonite, fibrous magnesium oxysulfate and hydrotalcite, and the filler can be used by appropriately selecting the particle size, and the fiber diameter, the fiber length and the aspect ratio in the case of a fibrous form. These may be used singly or in combination of two or more kinds thereof. The filler can be used in the form of being surface-treated, if necessary.

When the filler is compounded, the amount thereof compounded can be adjusted so as to be preferably 1 to 80 parts by mass, more preferably 3 to 50 parts by mass, further preferably 5 to 40 parts by mass based on 100 parts by mass of the synthetic resin.

Examples of the fatty acid metal salt include a compound having a structure represented by the following general formula (2):

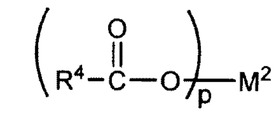

(2)

In the general formula (2), $R^4$ represents a group derived from a linear or branched aliphatic organic acid having 8 to 30 carbon atoms, $M^2$ represents a metal atom or $Al(OH)_{3-p}$, and p represents an integer of 1 to 3.

Examples of the aliphatic organic acid having 8 to 30 carbon atoms, represented by $R^4$ in the general formula (2), include hydrocarbon groups each having 7 to 29 carbon atoms, such as an alkyl group, an alkenyl group, and an alkyl group into which two or more unsaturated bonds are introduced. Such a group may be substituted with a hydroxyl group, and may be linear or branched.

Specific examples of the fatty acid metal salt include metal salts of saturated fatty acids such as caprylic acid, 2-ethylhexanoic acid, pelargonic acid, capric acid, undecylic acid, lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid, cerotic acid, montanic acid, melissic acid, and 12-hydroxystearic acid, metal salts of linear unsaturated fatty acids such as 4-decenoic acid, 4-dodecenoic acid, palmitoleic acid, $\alpha$-linolenic acid, linolic acid, $\gamma$-linolenic acid, stearidonic acid, petroselinic acid, oleic acid, elaidic acid, vaccenic acid, eicosapentaenoic acid, docosapentaenoic acid, and docosahexaenoic acid, and metal salts of aromatic fatty acids such as trimesic acid. The fatty acid metal salt in the flame retardant composition of the present invention is preferably a metal salt in which the hydrocarbon group represented by $R^4$ has 9 to 21 carbon atoms, and particularly preferably a metal salt of a saturated fatty acid such as lauric acid, myristic acid, stearic acid, palmitic acid or 12-hydroxystearic acid because the effects of the composition of the present invention

are remarkable.

Examples of the metal atom represented by $M^2$ in the general formula (2) include an alkali metal atom, an alkali earth metal atom, a transition metal atom, and a base metal atom. An alkali metal atom such as sodium, lithium or potassium is preferable in the composition of the present invention because the effects of the present invention are remarkable.

When the fatty acid metal salt is compounded, the amount thereof compounded is preferably adjusted so as to be 0.0005 to 5 parts by mass, in particular, 0.001 to 3 parts by mass based on 100 parts by mass of the synthetic resin.

The hydrotalcite compound is a composite salt compound known as a natural product or a synthetic product and made of magnesium, aluminum, a hydroxyl group, a carbonate group and optional crystal water, and examples include one where magnesium or aluminum is partially substituted with other metal such as an alkali metal or zinc, and one where a hydroxyl group and a carbonate group are each substituted with another anion group. Specific examples of the hydrotalcite compound include hydrotalcite having a structure represented by the following general formula (3), in which a metal is substituted with an alkali metal. An Al-Li-based hydrotalcite compound here used can also be a compound having a structure represented by the following general formula (4).

$$Mg_{x1}Zn_{x2}Al_2(OH)_{2(x1+x2)+4}(CO_3)qH_2O \qquad (3)$$

In the general formula (3), x1 and x2 respectively represent numbers satisfying conditions represented by the following expressions,

$$0 \leq x2/x1 < 10, 2 \leq x1 + x2 \leq 20$$

in which q represents 0 or a positive number.

$$[Li_{1/3}Al_{2/3}(OH)_2]\cdot[A^{r-}{}_{1/3r}\ qH_2O] \qquad (4)$$

In the general formula (4), $A^{r-}$ represents an r-valent anion, and q represents 0 or a positive number.

The carbonate anion in such a hydrotalcite compound may be partially substituted with other anion.

The hydrotalcite compound may be obtained by dehydrating crystal water, or may be covered with, for example, a higher fatty acid such as stearic acid, a higher fatty acid metal salt such as an oleic acid alkali metal salt, an organic sulfonic acid metal salt such as a dodecylbenzenesulfonic acid alkali metal salt, a higher fatty acid amide, a higher fatty acid ester, or wax.

The hydrotalcite compound may be a natural product or a synthetic product. Examples of the synthesis method of the hydrotalcite compound include known methods described in, for example, JP-S46-2280B, JP-S50-30039B, JP-S51-29129B, JP-H3-36839B, JP-S61-174270A, and JP-H5-179052A. The hydrotalcite compound can be used without any limitations on the crystal structure, the crystal particle, and the like thereof. The compound may be used singly or in combination of two or more kinds thereof.

When the hydrotalcite compound is compounded, the amount thereof compounded is preferably adjusted so as to be 0.001 to 5 parts by mass, in particular, 0.01 to 3 parts by mass based on 100 parts by mass of the synthetic resin.

(Component (D))

The flame retardant composition of the present invention preferably further contains zinc oxide as component (D).

The zinc oxide functions as a flame retardant aid. The zinc oxide may be surface-treated. The zinc oxide here used can be a commercially available product, and examples thereof include zinc oxide of JIS 1 grade (manufactured by MITSUI MINING & SMELTING CO., LTD.), zinc oxide partially coated (manufactured by MITSUI MINING & SMELTING CO., LTD.), NANOFINE 50 (ultrafine particulate zinc oxide having an average particle size of 0.02 $\mu$m: manufactured by SAKAI CHEMICAL INDUSTRY CO., LTD.), and NANOFINE K (ultrafine particulate zinc oxide coated with zinc silicate, having an average particle size of 0.02 $\mu$m: manufactured by SAKAI CHEMICAL INDUSTRY CO., LTD.).

The content of the zinc oxide as component (D) in the flame retardant composition of the present invention is preferably 0.01 to 30 parts by mass, more preferably 0.5 to 10 parts by mass, further preferably 1 to 5 parts by mass based on 100 parts by mass of component (A) from the viewpoint of flame retardance. The content of the zinc oxide is set to 0.01 parts by mass or more, and therefore flame retardance is more favorable. On the other hand, the content of the zinc oxide is set to 30 parts by mass or less, and therefore an adverse effect on processability hardly occurs.

(Component (E))

The flame retardant composition of the present invention preferably further contains at least one selected from the group consisting of silicone oil, an epoxy-based coupling agent and a lubricant, as component (E).

When the flame retardant composition of the present invention contains component (E), a flame retardant powder can be inhibited from being aggregated, and an enhancement in storage stability, an enhancement in dispersibility in the synthetic resin, and an enhancement in flame retardance can be expected.

Examples of the silicone oil include dimethylsilicone oil where all side chains and terminals of polysiloxane are methyl groups, methyl phenyl silicone oil where side chains and terminals of polysiloxane are methyl groups and some of the side chains are phenyl groups, methyl hydrogen silicone oil where side chains and terminals of polysiloxane are methyl groups and some of the side chains are hydrogen, and copolymers thereof, and amine-modified, epoxy-modified, alicyclic epoxy-modified, carboxyl-modified, carbinol-modified, mercapto-modified, polyether-modified, long-chain alkyl-modified, fluoroalkyl-modified, higher fatty acid ester-modified, higher fatty acid amide-modified, silanol-modified, diol-modified, phenol-modified and/or aralkyl-modified modified-silicone oil(s) can be used where organic groups are introduced into some of side chains and/or terminals.

Specific examples of the silicone oil include dimethylsilicone oils such as KF-96 (manufactured by Shin-Etsu Chemical Co., Ltd.), KF-965 (manufactured by Shin-Etsu Chemical Co., Ltd.) and KF-968 (manufactured by Shin-Etsu Chemical Co., Ltd.), methyl hydrogen silicone oils such as KF-99 (manufactured by Shin-Etsu Chemical Co., Ltd.), KF-9901 (Shin-Etsu Chemical Co., Ltd.), HMS-151 (manufactured by Gelest Inc.), HMS-071 (manufactured by Gelest Inc.), HMS-301 (manufactured by Gelest Inc.) and DMS-H21 (manufactured by Gelest Inc.), methyl phenyl silicone oils such as KF-50 (manufactured by Shin-Etsu Chemical Co., Ltd.), KF-53 (manufactured by Shin-Etsu Chemical Co., Ltd.), KF-54 (manufactured by Shin-Etsu Chemical Co., Ltd.) and KF-56 (manufactured by Shin-Etsu Chemical Co., Ltd.), epoxy-modified products such as X-22-343 (manufactured by Shin-Etsu Chemical Co., Ltd.), X-22-2000 (manufactured by Shin-Etsu Chemical Co., Ltd.), KF-101 (manufactured by Shin-Etsu Chemical Co., Ltd.), KF-102 (manufactured by Shin-Etsu Chemical Co., Ltd.) and KF-1001 (manufactured by Shin-Etsu Chemical Co., Ltd.), carboxyl-modified products such as X-22-3701E (manufactured by Shin-Etsu Chemical Co., Ltd.), carbinol-modified products such as X-22-4039 (manufactured by Shin-Etsu Chemical Co., Ltd.) and X-22-4015 (manufactured by Shin-Etsu Chemical Co., Ltd.), and amine-modified products such as KF-393 (manufactured by Shin-Etsu Chemical Co., Ltd.).

Methyl hydrogen silicone oils, among such silicone oils, are preferable in the flame retardant composition of the present invention in that a flame retardant powder is prevented from being aggregated and storage stability and dispersibility in the synthetic resin can be enhanced.

The epoxy-based coupling agent has functions of inhibiting a flame retardant powder from being aggregated, enhancing storage stability, and imparting water resistance and heat resistance. Examples of the epoxy-based coupling agent include a compound which is represented by general formula $A-(CH_2)_k-Si(OR)_3$ and which has an epoxy group. **In** the formula, A represents an epoxy group, k represents an integer of 1 to 3, and R represents a methyl group or an ethyl group. Examples of the epoxy group here mentioned include a glycidoxy group and a 3,4-epoxycyclohexyl group.

Specific examples of the epoxy-based coupling agent include 2-(3,4-epoxycyclohexyl)ethyltrimethoxysilane, 3-glycidoxypropyl methyldimethoxysilane, 3-glycidoxypropyl trimethoxysilane, 3-glycidoxypropyl methyldiethoxysilane, 3-glycidoxypropyl triethoxysilane and glycidoxyoctyltrimethoxysilane, as epoxy group-containing silane coupling agents.

Examples of the lubricant include pure hydrocarbon-based lubricants such as liquid paraffin, natural paraffin, microwax, synthetic paraffin, low-molecular-weight polyethylene and polyethylene wax; halogenated hydrocarbon-based lubricants; fatty acid-based lubricants such as higher fatty acid and oxyfatty acid; fatty acid amide-based lubricants such as fatty acid amide and bisfatty acid amide; ester-based lubricants such as lower alcohol ester of fatty acid, polyhydric alcohol ester of fatty acid such as glyceride, polyglycol ester of fatty acid, and fatty alcohol ester (ester wax) of fatty acid; and lubricants such as metal soap, fatty alcohol, polyhydric alcohol, polyglycol, polyglycerol, partial ester of fatty acid and polyhydric alcohol, partial ester of fatty acid and polyglycol or polyglycerol, silicone oil, and mineral oil. The lubricant can be used singly or in combination of two or more kinds thereof.

When the flame retardant composition of the present invention contains component (E), the content of component (E) in the flame retardant composition of the present invention is preferably 0.01 to 5 parts by mass, more preferably 0.01 to 3 parts by mass based on 100 parts by mass of component (A) from the viewpoint that the effect by containing component (E) is effectively exerted.

In particular, when the silicone oil is contained in the flame retardant composition of the present invention, the content of the silicone oil is preferably 0.01 to 3 parts by mass, more preferably 0.1 to 1 part by mass based on 100 parts by mass of component (A) from the viewpoint that the effect by containing the silicone oil is enhanced.

In particular, when the epoxy-based coupling agent is contained in the flame retardant composition of the present invention, the content of the epoxy-based coupling agent is preferably 0.01 to 3 parts by mass, more preferably 0.1 to 1 part by mass based on 100 parts by mass of component (A) from the viewpoint that the effect by containing the epoxy-based coupling agent is enhanced.

In particular, when the lubricant is contained in the flame retardant composition of the present invention, the content of the lubricant is preferably 0.01 to 3 parts by mass, more preferably 0.1 to 0.5 parts by mass based on 100 parts by mass of component (A) from the viewpoint that the effect by containing the lubricant is enhanced.

The flame retardant composition of the present invention may optionally a known resin additive as long as the effects of the present invention are not remarkably impaired. Such a resin additive here used is, for example, one or more selected from a phenolic antioxidant, a phosphorus-based antioxidant, a thioether-based antioxidant, other antioxidant, a hindered amine-based light stabilizer, an ultraviolet absorber, a plasticizer, a crystal nucleating agent, a flame retardant other than component (A) in the present invention, a flame retardant aid, a dripping inhibitor, an acrylic processing aid, an antistatic agent, a pigment, and a dye. Such a resin additive may be compounded in the flame retardant composition of the present invention in advance, or may be compounded in preparation of the flame-retardant synthetic resin composition as described below.

Examples of the phenolic antioxidant include 2,6-di-tert-butyl-p-cresol, 2,6-diphenyl-4-octadesiloxyphenol, stearyl(3,5-di-tert-butyl-4-hydroxyphenyl)propionate, distearyl(3,5-di-tert-butyl-4-hydroxybenzyl)phosphonate, tridecyl/3,5-di-tert-butyl-4-hydroxybenzyl thioacetate, thiodiethylenebis[(3,5-di-tert-butyl-4-hydroxyphenyl)propionate], 4,4'-thiobis(6-tert-butyl-m-cresol), 2-octylthio-4,6-bis(3,5-di-tert-butyl-4-hydroxyphenoxy)-s-triazine, 2,2'-methylenebis(4-methyl-6-tert-butylphenol), ethylenebis[3,3-bis(4-hydroxy-3-tert-butylphenyl)butyrate], 4,4'-butylidenebis(2-tert-butyl-5-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3,5-di-tert-butyl-4-hydroxyphenyl)propionate]methane, 2-tert-butyl-4-methyl-6-(2-acryloyloxy-3-tert-butyl-5-methylbenzyl)phenol, 3,9-bis[2-{3-(3-tert-butyl-4-hydroxy-5-methylphenyl)propanoyloxy}-1,1-dimethylethyl]-2,4,8,10-tetraoxaspiro[5.5]undecane and triethylene glycol bis[β-(3-tert-butyl-4-hydroxy-5-methylphenyl)propionate]. Such phenolic antioxidants may be used singly or in combination of two or more kinds thereof.

The content of the phenolic antioxidant in the flame retardant composition of the present invention can be in a range that does not impair any effects of the present invention, and is preferably in an amount of 0.01 to 1 part by mass, more preferably in an amount of 0.03 to 0.8 parts by mass based on 100 parts by mass of the synthetic resin included in the resin composition containing the flame retardant composition of the present invention.

Examples of the phosphorus-based antioxidant include triphenyl phosphite, diisooctyl phosphite, heptakis(dipropylene glycol)triphosphite, triisodecyl phosphite, diphenyl isooctyl phosphite, diisooctyl phenyl phosphite, diphenyl tridecyl phosphite, triisooctyl phosphite, trilauryl phosphite, diphenyl phosphite, tris(dipropylene glycol)phosphite, diisodecyl pentaerythritol diphosphite, dioleyl hydrogen phosphite, trilauryl trithiophosphite, bis(tridecyl)phosphite, tris(tridecyl)phosphite, diphenyl decyl phosphite, dinonylphenyl bis(nonylphenyl)phosphite, poly(dipropylene glycol)phenyl phosphite, tetraphenyl dipropylene glycol diphosphite, tris(nonylphenyl)phosphite, tris(2,4-di-tert-butylphenyl)phosphite, tris(2,4-di-tert-butyl-5-methylphenyl)phosphite, tris[2)-tert-butyl-4-(3-tert-butyl-4-hydroxy-5-methylphenylthio)-5-methylphenyl]phosphite, tridecyl phosphite, octyl diphenyl phosphite, dodecyl monophenyl phosphite, distearyl pentaerythritol diphosphite, a mixture of distearyl pentaerythritol diphosphate and a calcium stearate salt, bis(tridecyl)pentaerythritol diphosphite, bis(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetraphenyl tetrakis(tridecyl)pentaerythritol tetraphosphite, bis(2,4-di-tert-butyl-6-methylphenyl)ethyl phosphite, tetrakis(tridecyl)isopropylidenediphenol diphosphite, tetrakis(tridecyl)-4,4'-n-butylidenebis(2-tert-butyl-5-methylphenol)diphosphite, hexakis(tridecyl)-1,1,3-tris(2-methyl-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, (1-methyl-1-propenyl-3-ylidene)tris(1,1-dimethylethyl)-5-methyl-4,1-phenylene)hexakis(tridecyl)phosphite, 2,2'-methylenebis(4,6-di-tert-butylphenyl)-2-ethylhexyl phosphite, 2,2'-methylenebis(4,6-di-tert-butylphenyl)octadecyl phosphite, 2,2'-ethylidenebis(4,6-di-tert-butylphenyl)fluorophosphite, 4,4'-butylidenebis(2-tert-butyl-5-methylphenyl)tetratridecyl bisphosphite, tris(2-[(2,4,8,10-tetrakis-tert-butyldibenzo[d,f][1,3,2]dioxaphosphepin-6-yl)oxy]ethyl) amine, 3,9-bis(4-nonylphenoxy)-2,4,8,10-tetraoxa-3,9-diphosphesspiro[5,5]undecane, 2,4,6-tri-tert-butylphenyl-2-butyl-2-ethyl-1,3-propanediol phosphite, 4,4'-isopropylidenediphenol $C_{10}$ alcohol phosphite, and 4,4'-isopropylidenediphenol $C_{12-15}$ alcohol phosphite. Such phosphorus-based antioxidants may be used singly or in combination of two or more kinds thereof.

The content of the phosphorus-based antioxidant in the flame retardant composition of the present invention can be in a range that does not impair any effects of the present invention, and is preferably in an amount of 0.01 to 1 part by mass, more preferably in an amount of 0.03 to 0.8 parts by mass based on 100 parts by mass of the synthetic resin included in the resin composition containing the flame retardant composition of the present invention.

Examples of the thioether-based antioxidant include tetrakis[methylene-3-(laurylthio)propionate]methane, bis(methyl-4-[3-n-alkyl(C12/C14)thiopropionyloxy]5-tert-butylphenyl)sulfide, bis(tridecyl)-3,3'-thiodipropionate, dilauryl-3,3'-thiodipropionate, dimyristyl-3,3'-thiodipropionate, distearyl-3,3'-thiodipropionate, lauryl/stearyl thiodipropionate,

4,4'-thiobis(6-tert-butyl-m-cresol), and 2,2'-thiobis(6-tert-butyl-p-cresol), distearyl-disulfide. Such thioether-based antioxidants may be used singly or in combination of two or more kinds thereof.

The content of the thioether-based antioxidant in the flame retardant composition of the present invention can be in a range that does not impair any effects of the present invention, and is preferably in an amount of 0.001 to 10 parts by mass, more preferably in an amount of 0.005 to 5 parts by mass based on 100 parts by mass of the synthetic resin included in the resin composition containing the flame retardant composition of the present invention.

Examples of the hindered amine-based light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)/bis(tridecyl)-1,2,3,4-butane tetracarboxylate, bis(1,2,2,6,6-pentamethyl-4-piperidyl)/di(tridecyl)-1,2,3,4-butane tetracarboxylate, bis(1,2,2,6,6-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis(2,2,6,6-tetramethyl-1-octyloxy-4-piperidyl)decanedioate, bis(2,2,6,6-tetramethyl-1-undecyloxypiperidin-4-yl)carbonate, and TINUVIN NOR 371 manufactured by Ciba Specialty Chemicals. Such hindered amine-based light stabilizers may be used singly or in combination of two or more kinds thereof.

The content of such a hindered amine-based light stabilizer can be in a range that does not impair any effects of the present invention, and is preferably in an amount of 0.001 to 10 parts by mass, more preferably in an amount of 0.005 to 1 part by mass based on 100 parts by mass of the synthetic resin included in the resin composition containing the flame retardant composition of the present invention.

Examples of the ultraviolet absorber include 2-hydroxybenzophenones such as 2,4-dihydroxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl] benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; benzoates such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy) benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl (3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-$\alpha$-cyano-$\beta$,$\beta$-diphenyl acrylate and methyl-2-cyano-3-methyl-3-(p-methoxyphenyl)acrylate; and various metal salts or metal chelates, in particular, salts or chelates of nickel or chromium. Such ultraviolet absorbers may be used singly or in combination of two or more kinds thereof.

The content of the ultraviolet absorber in the flame retardant composition of the present invention can be in a range that does not impair any effects of the present invention, and is preferably in an amount of 0.001 to 10 parts by mass, more preferably in an amount of 0.005 to 1 part by mass based on 100 parts by mass of the synthetic resin included in the resin composition containing the flame retardant composition of the present invention.

Examples of the plasticizer include phthalic acid-based plasticizers such as dibutyl phthalate, butyl benzyl phthalate, butyl hexyl phthalate, diheptyl phthalate, dioctyl phthalate, bis(2-ethylhexyl)phthalate, diisooctyl phthalate, diisononyl phthalate, diisodecyl phthalate, dilauryl phthalate, dicyclohexyl phthalate, dioctyl terephthalate and bis(2-ethylhexyl)terephthalate; adipic acid-based plasticizers such as dioctyl adipate, bis(2-ethylhexyl)adipate, diisononyl adipate, diisodecyl adipate and bis(butyl diglycol)adipate; phosphate-based plasticizers such as triphenyl phosphate, tricresyl phosphate, trixylylenyl phosphate, tris(isopropylphenyl)phosphate, triethyl phosphate, tributyl phosphate, trioctyl phosphate, tris(butoxyethyl)phosphate and octyl diphenyl phosphate; polyester-based plasticizers in which a polyhydric alcohol such as ethylene glycol, diethylene glycol, triethylene glycol, 1,2-propanediol, 1,3-propanediol, 2-methyl-1,3-propanediol, 1,3-butanediol, 1,4-butanediol, 1,5-pentanediol, 1,6-hexanediol, neopentyl glycol or trimethylolpropane and

a dibasic acid such as oxalic acid, malonic acid, succinic acid, glutaric acid, adipic acid, pimelic acid, suberic acid, azelaic acid, sebacic acid, phthalic acid, isophthalic acid, terephthalic acid or cinnamic acid are used and, if necessary, a monohydric alcohol, a monocarboxylic acid (acetic acid, lauric acid, aromatic acid, or the like), or the like is used as a stopper; epoxy-based plasticizers such as epoxidized soybean oil, epoxidized linseed oil, epoxidized wood oil, epoxidized fish oil, epoxidized beef tallow oil, epoxidized castor oil, epoxidized safflower oil, epoxidized methyl stearate, epoxidized butyl stearate, epoxidized (2-ethylhexyl) stearate, epoxidized stearic acid stearyl ester, epoxidized polybutadiene, tris(epoxypropyl)isocyanurate, epoxidized tall oil fatty acid ester, epoxidized linseed oil fatty acid ester, bisphenol A diglycidyl ether, vinyl cyclohexene diepoxide, dicyclohexene diepoxide, 3,4-epoxycyclohexylmethyl and epoxycyclohexanecarboxylate, and others, for example, tetrahydrophthalic acid-based plasticizers, azelaic acid-based plasticizers, sebacic acid-based plasticizers such as bis(2-ethylhexyl)sebacate and dibutyl sebacate, stearic acid-based plasticizers, citric acid-based plasticizers, trimellitic acid-based plasticizers, pyromellitic acid-based plasticizers, biphenylene polycarboxylic acid-based plasticizers, and aromatic acid ester-based plasticizers such as trimethylolpropane tribenzoate, diethylene glycol dibenzoate, dipropylene glycol dibenzoate, (2-ethylhexyl)benzoate and isodecyl benzoate. Preferable examples include polyester-based plasticizers, phthalic acid-based plasticizers, trimellitic acid-based plasticizers, adipic acid-based plasticizers, sebacic acid-based plasticizers, and epoxy-based plasticizers. Such plasticizers may be used singly or in combination of two or more kinds thereof.

The content of the plasticizer in the flame retardant composition of the present invention can be in a range that does not impair any effects of the present invention, and is preferably in an amount of 1 to 90 parts by mass, more preferably in an amount of 10 to 80 parts by mass based on 100 parts by mass of the synthetic resin included in the resin composition containing the flame retardant composition of the present invention.

Examples of the crystal nucleating agent include carboxylic acid metal salts such as sodium benzoate, a 4-tert-butylbenzoate aluminum salt, sodium adipate and disodium bicyclo[2.2.1]heptane-2,3-dicarboxylate, phosphate metal salts such as sodium bis(4-tert-butylphenyl)phosphate, polyhydric alcohol derivatives such as dibenzylidene sorbitol, bis(methylbenzylidene)sorbitol, bis(p-ethylbenzylidene)sorbitol, bis(dimethylbenzylidene)sorbitol and 1,2,3-trideoxy-4,6:5,7-O-bis(4-propylbenzylidene)nonitole, amide compounds such as N,N',N"-tris[2-methylcyclohexyl]-1,2,3-propane tricarboxamide (RIKACLEAR PC1), N,N',N"-tricyclohexyl-1,3,5-benzene tricarboxamide, N,N'-dicyclohexylnaphthalene dicarboxamide and 1,3,5-tris(dimethylisopropoylamino)benzene. Such crystal nucleating agents may be used singly or in combination of two or more kinds thereof.

The content of the crystal nucleating agent in the flame retardant composition of the present invention can be in a range that does not impair any effects of the present invention, and is preferably in an amount of 0.001 to 10 parts by mass, more preferably in an amount of 0.01 to 5 parts by mass based on 100 parts by mass of the synthetic resin included in the resin composition containing the flame retardant composition of the present invention.

Examples of the flame retardant other than component (A) in the present invention include aromatic phosphates such as triphenyl phosphate, tricresyl phosphate, trixylylenyl phosphate, cresyl diphenyl phosphate, cresyl-2,6-dixylylenyl phosphate, resorcinol bis(diphenyl phosphate), (1-methylethylidene)-4,1-phenylenetetraphenyl diphosphate and 1,3-phenylene tetrakis(2,6-dimethylphenyl)phosphate, trade names "ADK STAB FP-500", "ADK STAB FP-600", "ADK STAB FP-800" and "ADK STAB FP-900L" manufactured by ADEKA CORPORATION, phosphonates such as divinyl phenylphosphonate, diallyl phenylphosphonate and (1-butenyl) phenylphosphonate, phosphinates such as phenyl diphenylphosphinate, methyl diphenylphosphinate and a 9,10-dihydro-9-oxa-10-phosphaphenanthrene-10-oxide derivative, phosphazene compounds such as bis(2-allylphenoxy)phosphazene and dicresylphosphazene, phosphorus-based flame retardants such as red phosphorus, metal hydroxides such as magnesium hydroxide and aluminum hydroxide, and bromine-based flame retardants such as a brominated bisphenol A type epoxy resin, a brominated phenol novolac type epoxy resin, hexabromobenzene, pentabromotoluene, ethylenebis(pentabromophenyl), ethylenebistetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene and 2,4,6-tris(tribromophenoxy)-1,3,5-triazine, tribromophenylmaleimide, tribromophenyl acrylate, tribromophenyl methacrylate, tetrabromobisphenol A type dimethacrylate, pentabromobenzyl acrylate and brominated styrene. Such flame retardants may be used singly or in combination of two or more kinds thereof.

The content of the flame retardant other than component (A) in the present invention, in the flame retardant composition of the present invention, can be in a range that does not impair any effects of the present invention, and is preferably in an amount of 1 to 90 parts by mass, more preferably in an amount of 3 to 80 parts by mass based on 100 parts by mass of the synthetic resin included in the resin composition containing the flame retardant composition of the present invention.

Examples of the flame retardant aid include, as inorganic flame retardant aids, inorganic compounds such as titanium oxide, aluminum oxide, magnesium oxide, hydrotalcite, talc and montmorillonite, and surface-treated products thereof, for example, inorganic flame retardant aids such as TIPAQUE R-680 (titanium oxide: manufactured by ISHIHARA SANGYO KAISHA, LTD.), Kyowamag 150 (magnesium oxide: manufactured by Kyowa Chemical Industry Co., Ltd.), DHT-4A (hydrotalcite: manufactured by Kyowa Chemical Industry Co., Ltd.) and Alcamizer 4 (zinc-modified hydrotalcite:

manufactured by Kyowa Chemical Industry Co., Ltd.), and include, as organic flame retardant aids, polyhydric alcohol compounds such as pentaerythritol, dipentaerythritol, tripentaerythritol, polypentaerythritol, neopentyl glycol, trimethylolpropane, ditrimethylolpropane, 1,3,5-tris(2-hydroxyethyl)isocyanurate (THEIC), polyethylene glycol, glycerin, diglycerin, mannitol, maltitol, lactitol, sorbitol, erythritol, xylitol, xylose, sucrose, trehalose, inositol, fructose, maltose and lactose. Among these polyhydric alcohol compounds, one or more selected from the group consisting of pentaerythritol, pentaerythritols such as dipentaerythritol, tripentaerythritol and polypentaerythritol, and respective condensates of such pentaerythritols are preferable, respective condensates of dipentaerythritol and pentaerythritol are particularly preferable, and dipentaerythritol is most preferable. THEIC and sorbitol can also be suitably used. Such flame retardant aids may be used singly or in combination of two or more kinds thereof.

The content of the flame retardant aid in the flame retardant composition of the present invention can be in a range that does not impair any effects of the present invention, and is preferably in an amount of 0.01 to 20 parts by mass, more preferably in an amount of 0.1 to 10 parts by mass based on 100 parts by mass of the synthetic resin included in the resin composition containing the flame retardant composition of the present invention.

Examples of the dripping inhibitor include a fluorine-based dripping inhibitor, silicone rubber, and lamellar silicate. Examples of the fluorine-based dripping inhibitor include fluorine-based resins such as polytetrafluoroethylene, polyvinylidene fluoride and polyhexafluoropropylene, perfluoroalkanesulfonic acid alkali metal salt compounds such as a perfluoromethanesulfonic acid sodium salt, a perfluoro-n-butanesulfonic acid potassium salt, a perfluoro-t-butanesulfonic acid potassium salt, a perfluorooctanesulfonic acid sodium salt and a perfluoro-2-ethylhexanesulfonic acid calcium salt, or perfluoroalkanesulfonic acid alkali earth metal salts. Examples of the lamellar silicate include smectite-based clay minerals such as montmorillonite, saponite, hectorite, beidellite, stevensite and non-tronite, vermiculite, halloysite, swellable mica, and talc, and one in which an organic cation, a quaternary ammonium cation or a phosphonium cation is intercalated may be adopted. Such dripping inhibitors may be used singly or in combination of two or more kinds thereof. Among such dripping inhibitors, in particular, a fluorine-based dripping inhibitor is preferable and polytetrafluoroethylene is most preferable from the viewpoint of dripping inhibition properties.

The content of the dripping inhibitor in the flame retardant composition of the present invention can be in a range that does not impair any effects of the present invention, and is preferably in an amount of 0.005 to 5 parts by mass, more preferably 0.01 to 5 parts by mass, further preferably 0.05 to 3 parts by mass, still more preferably 0.1 to 1 part by mass based on 100 parts by mass of component (A) in the present invention. The content is 0.005 parts by mass or more and therefore the dripping inhibition effect can be sufficiently obtained, and the content is 5 parts by mass or less and therefore no resin characteristics are deteriorated.

The acrylic processing aid here used can be obtained by polymerizing one (meth)acrylate or copolymerizing two or more kinds thereof. Examples of the (meth)acrylate to be polymerized or copolymerized include (meth)acrylates such as methyl acrylate, methyl methacrylate, ethyl acrylate, ethyl methacrylate, n-propyl acrylate, isopropyl acrylate, n-propyl methacrylate, isopropyl methacrylate, n-butyl acrylate, isobutyl acrylate, t-butyl methacrylate, n-hexyl acrylate, n-hexyl methacrylate, 2-ethylhexyl acrylate, 2-ethylhexyl methacrylate, dodecyl methacrylate and tridecyl methacrylate. Examples include, in addition to the above, (meth)acrylic acids, and hydroxy group-containing (meth)acrylates.

The content of the acrylic processing aid in the flame retardant composition of the present invention can be in a range that does not impair any effects of the present invention, and is preferably in an amount of 0.01 to 10 parts by mass, more preferably in an amount of 0.03 to 1 part by mass based on 100 parts by mass of the synthetic resin included in the resin composition containing the flame retardant composition of the present invention.

Examples of the antistatic agent include cationic antistatic agents such as a fatty acid quaternary ammonium ion salt and a polyamine quaternary salt; anionic antistatic agents such as a higher alcohol phosphate salt, a higher alcohol EO adduct, a polyethylene glycol fatty acid ester, an anion type alkylsulfonic acid salt, a higher alcohol sulfate salt, a higher alcohol ethylene oxide adduct sulfate salt and a higher alcohol ethylene oxide adduct phosphate salt; non-ionic antistatic agents such as polyhydric alcohol fatty acid ester, polyglycol phosphate and polyoxyethylene alkyl allyl ether; and amphoteric antistatic agents, for example, amphoteric alkylbetaines such as alkyldimethylaminoacetic acid betaine, and an imidazoline type amphoteric activator. Such antistatic agents may be used singly or in combination of two or more kinds thereof.

The content of the antistatic agent in the flame retardant composition of the present invention can be in a range that does not impair any effects of the present invention, and is preferably in an amount of 0.01 to 20 parts by mass, more preferably in an amount of 0.03 to 10 parts by mass based on 100 parts by mass of the synthetic resin included in the resin composition containing the flame retardant composition of the present invention.

A commercially available pigment can be used as the pigment, and examples thereof include Pigment Red 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; Pigment Orange 13, 31, 34, 36, 38, 43, 46, 48, 49, 51, 52, 55, 59, 60, 61, 62, 64, 65, and 71; Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; Pigment Green 7, 10, and 36; Pigment Blue 15, 15:1, 15:2, 15:3, 15:4, 15:5, 15:6, 22, 24, 56, 60, 61,

62, and 64; and Pigment Violet 1, 19, 23, 27, 29, 30, 32, 37, 40, and 50. Such pigments may be used singly or in combination of two or more kinds thereof.

The content of the pigment in the flame retardant composition of the present invention can be in a range that does not impair any effects of the present invention, and is preferably in an amount of 0.001 to 5 parts by mass, more preferably in an amount of 0.003 to 3 parts by mass based on 100 parts by mass of the synthetic resin included in the resin composition containing the flame retardant composition of the present invention.

Examples of the dye include an azo dye, an anthraquinone dye, an indigoid dye, a triarylmethane dye, a xanthene dye, an alizarin dye, an acridine dye, a stilbene dye, a thiazole dye, a naphthol dye, a quinoline dye, a nitro dye, an indamine dye, an oxazine dye, a phthalocyanine dye, and a cyanine dye. Such dyes may be used singly or in combination of two or more kinds thereof.

The content of the dye in the flame retardant composition of the present invention can be in a range that does not impair any effects of the present invention, and is preferably in an amount of 0.001 to 5 parts by mass, more preferably in an amount of 0.003 to 3 parts by mass based on 100 parts by mass of the synthetic resin included in the resin composition containing the flame retardant composition of the present invention.

Any other additive(s) for use in a common synthetic resin, for example, a crosslinker, an anti-fogging agent, a plate-out inhibitor, a surface treatment agent, a fluorescent agent, a mildew-proofing agent, a fungicide, a foaming agent, a metal deactivator, a release agent, and/or a processing aid other than the acrylic processing aid may be, if necessary, compounded in the flame retardant composition of the present invention, as long as the effects of the present invention are not remarkably impaired. Such a component may be compounded in the flame retardant composition of the present invention, in advance, or may be compounded in preparation of the flame-retardant synthetic resin composition as described below.

In order to obtain the flame retardant composition of the present invention, component (A) and component (B), and, if necessary, any other component may be mixed, and any of various mixing machines can be used in the mixing. Heating may be made during the mixing. Examples of a usable mixing machine include a tumbler mixer, a Henschel mixer, a ribbon blender, a V-type mixing machine, a W-type mixing machine, a super mixer, and a Nauta mixer.

The flame retardant composition of the present invention can be compounded in a synthetic resin, particularly preferably, a thermoplastic resin, and thus used as a flame-retardant synthetic resin composition.

<Flame-retardant synthetic resin composition>

The flame-retardant synthetic resin composition of the present invention contains at least one synthetic resin and at least one of the flame retardant composition of the present invention.

Specific examples of the synthetic resin can include polyolefin-based resins and copolymers thereof, for example, α-olefin polymers such as polypropylene, high-density polyethylene, low-density polyethylene, linear low-density polyethylene, crosslinked polyethylene, ultrahigh-molecular weight polyethylene, polybutene-1, poly-3-methylpentene and poly-4-methylpentene, or an ethylene-vinyl acetate copolymer, an ethylene-ethyl acrylate copolymer, and an ethylene-propylene copolymer; halogen-containing resins such as polyvinyl chloride, polyvinylidene chloride, chlorinated polyethylene, chlorinated polypropylene, polyvinylidene fluoride, chlorinated rubber, a vinyl chloride-vinyl acetate copolymer, a vinyl chloride-ethylene copolymer, a vinyl chloride-vinylidene chloride copolymer, a vinyl chloride-vinylidene chloride-vinyl acetate terpolymer, a vinyl chloride-acrylate copolymer, a vinyl chloride-maleate copolymer, and a vinyl chloride-cyclohexylmaleimide copolymer; petroleum resins, coumarone resins, polystyrene, polyvinyl acetate, acrylic resins, and copolymers (for example, AS resin, ABS (acrylonitrile-butadiene-styrene copolymer) resin, ACS resin, SBS resin, MBS resin, and heat-resistant ABS resin) of styrene and/or α-methylstyrene with other monomer (for example, maleic anhydride, phenylmaleimide, methyl methacrylate, and/or butadiene, acrylonitrile); polymethyl methacrylate, polyvinyl alcohol, polyvinyl formal, and polyvinyl butyral; polyalkylene terephthalates such as polyethylene terephthalate, polybutylene terephthalate and polycyclohexanedimethylene terephthalate, aromatic polyesters, for example, polyalkylene naphthalates such as polyethylene naphthalate and polybutylene naphthalate, and linear polyesters such as polytetramethylene terephthalate; degradable aliphatic polyesters such as polyhydroxybutyrate, polycaprolactone, polybutylene succinate, polyethylene succinate, polylactate, polymalate, polyglycolide, polydioxane and poly(2-oxetanone); and synthetic resins and blended products thereof, for example, polyamides such as polyphenylene oxide, polycaprolactam and polyhexamethylene adipamide, polycarbonate, polycarbonate/ABS resins, branched polycarbonate, polyacetal, polyphenylene sulfide, polyurethane, cellulose-based resins, polyimide resins, polysulfone, polyphenylene ether, polyether ketone, polyether ether ketone, and liquid crystal polymers. The synthetic resin may be an elastomer such as isoprene rubber, butadiene rubber, acrylonitrile-butadiene copolymerized rubber, styrene-butadiene copolymerized rubber, fluororubber, silicone rubber, a polyolefin-based thermoplastic elastomer, a styrene-based thermoplastic elastomer, a polyester-based thermoplastic elastomer, a nitrile-based thermoplastic elastomer, a nylon-based thermoplastic elastomer, a vinyl chloride-based thermoplastic elastomer, a polyamide-based thermoplastic elastomer, or a polyurethane-based thermoplastic elastomer. In the present invention, such synthetic resins may be

used singly or in combination of two or more kinds thereof. The synthetic resin may be alloyed.

Such synthetic resins can be each used regardless of, for example, the molecular weight, the degree of polymerization, the density, the softening point, the proportion of an insoluble fraction in a solvent, the degree of stereoregularity, the presence of a catalyst residue, the type and the compounding ratio of a monomer serving as a raw material, and the type of a polymerization catalyst (for example, a Ziegler catalyst or a metallocene catalyst). Among such synthetic resins, one or more selected from the group consisting of polyolefin-based resins, polystyrene-based resins and copolymers thereof are preferable and are also preferably used in combination with the thermoplastic elastomer, from the viewpoint that excellent flame retardance can be imparted.

The synthetic resin may optionally contain known resin additive, as long as the effects of the present invention are not remarkably impaired. Such a resin additive here used corresponds to, for example, one or more selected from the group consisting of a phenolic antioxidant, a phosphorus-based antioxidant, a thioether-based antioxidant, other antioxidant, a hindered amine-based light stabilizer, an ultraviolet absorber, plasticizer, a crystal nucleating agent, a flame retardant other than component (A) in the present invention, a flame retardant aid, a dripping inhibitor, an acrylic processing aid, an antistatic agent, pigment and a dye, and specific examples thereof include those that are the same as the above resin additives that can be contained in the flame retardant composition. Such a resin additive may be compounded in the synthetic resin in advance, or may be compounded in preparation of the flame-retardant synthetic resin composition.

When a polyolefin-based resin is used as the thermoplastic resin, a known neutralizer is preferably, if necessary, further added in order to neutralize a residual catalyst in the polyolefin-based resin, as long as the effects of the present invention are not impaired. Examples of the neutralizer include fatty acid metal salts such as calcium stearate, lithium stearate and sodium stearate, fatty acid amide compounds such as ethylenebis(stearic acid amide), ethylenebis(12-hydroxystearic acid amide) and stearic acid amide, and inorganic compounds such as hydrotalcite, and such a neutralizer may also be mixed and used. The amount of such a neutralizer used is preferably 0.001 to 3% by mass, more preferably 0.01 to 1% by mass in the flame-retardant synthetic resin composition, when compounded in the synthetic resin.

The content of the flame retardant composition in the flame-retardant synthetic resin composition of the present invention is preferably in an amount of 10 to 400 parts by mass, more preferably 10 to 300 parts by mass, further preferably 10 to 150 parts by mass, particularly preferably 20 to 120 parts by mass based on 100 parts by mass of the synthetic resin. The content of the flame retardant composition based on 100 parts by mass of the synthetic resin is 10 parts by mass or more and thus sufficient flame retardance can be exhibited, and the content is 400 parts by mass or less and thus original physical properties of the resin are not impaired.

The method for compounding the flame retardant composition of the present invention in the synthetic resin is not particularly limited, and a known method can be adopted. Specific examples of the compounding method include a method of mixing by a usual blender, mixer or the like, a method of melt kneading by an extruder or the like, and a method involving mixing with a solvent and solution casting.

The flame-retardant synthetic resin composition of the present invention satisfies a relationship represented by the following expressions (i) and (ii):

$$\text{(i) } 0.935 \leq \Delta TD/\Delta TD_B \leq 1.065$$

$$\text{(ii) } 0.860 \leq (\Delta TD/\Delta MD)/(\Delta TD_B/\Delta MD_B) \leq 1.140$$

In the expressions, $\Delta MD$ represents the shrinkage factor (%) in the MD direction of a molded body formed by injection molding of the flame-retardant synthetic resin composition, and $\Delta TD$ represents the shrinkage factor (%) in the TD direction of the molded body formed by injection molding of the flame-retardant synthetic resin composition. Herein, the MD direction is the flow direction of the resin in a mold cavity during injection molding, and the TD direction is the direction perpendicular to the MD direction. The $\Delta MD_B$ means the shrinkage factor in the MD direction of a molded body formed by injection molding of a base resin, the $\Delta TD_B$ means the shrinkage factor in the TD direction of the molded body formed by injection molding of a base resin, and the base resin means a synthetic resin composition having a compositional ratio in which the flame retardant composition is excluded from the flame-retardant synthetic resin composition.

The shrinkage factors $\Delta MD$ and $\Delta TD$ are respectively represented by the following expressions:

$$\Delta MD\ (\%) = [(MD_0 - MD_1)/MD_0] \times 100$$

$$\Delta TD\ (\%) = [(TD_0 - TD_1)/TD_0] \times 100$$

In the expressions, $MD_0$ is the dimension in the MD direction of a mold cavity for use in injection molding, $TD_0$ is

the dimension in the TD direction of the mold cavity for use in injection molding, $MD_1$ is the dimension in the MD direction of a molded body obtained by injection molding with the mold, and $TD_1$ is the dimension in the TD direction of the molded body obtained by injection molding with the mold.

In the expression (ii), the $\Delta TD/\Delta MD$ represents the longitudinal and lateral balance in terms of mold shrinkage factor in the flame-retardant synthetic resin composition, and the $\Delta TD_B/\Delta MD_B$ represents the longitudinal and lateral balance in terms of mold shrinkage factor in the base resin. To satisfy the expression (ii) means that $\Delta TD/\Delta MD$ of the flame-retardant synthetic resin composition is close to $\Delta TD_B/\Delta MD_B$, and it is indicated that, as these ratios are closer to 1, the respective longitudinal and lateral balances in terms of mold shrinkage factor, in the flame-retardant synthetic resin composition and the base resin, are closer to each other and a molded body having an aspect ratio as intended in mold design is more easily obtained.

To satisfy the expression (i) means that $\Delta TD$ of the flame-retardant synthetic resin composition is close to $\Delta TD_B$, and it is indicated that, as the ratio between them is closer to 1, the respective mold shrinkage factors of the flame-retardant synthetic resin composition and the base resin are closer to each other and a molded body having a dimension as intended during mold design is more easily obtained.

In other words, to simultaneously satisfy both the expressions (i) and (ii) means that, even when the flame-retardant synthetic resin composition of the present invention is molded by using a mold designed for molding the base resin, a molded body close in shape to a molded body made of the base resin is obtained.

The lower limit value of $\Delta TD/\Delta TD_B$ in the expression (i) is required to be 0.935, preferably 0.940, more preferably 0.945, from the viewpoint that the effects of the present invention are favorably obtained. The upper limit value of $\Delta TD/\Delta TD_B$ in the expression (i) is required to be 1.065, preferably 1.060, more preferably 1.055.

The lower limit value of $(\Delta TD/\Delta MD)/(\Delta TD_B/\Delta MD_B)$ in the expression (ii) is required to be 0.860, preferably 0.865, more preferably 0.870, from the viewpoint that the effects of the present invention are favorably obtained. The upper limit value of $(\Delta TD/\Delta MD)/(\Delta TD_B/\Delta MD_B)$ in the expression (ii) is required to be 1.140, preferably 1.135, more preferably 1.130.

The respective dimensions of the molded body and the mold cavity can be measured by using measurement equipment such as a caliper, a scale, a digital length measurement machine, or an image measurement machine. The respective dimensions of the molded body and the mold cavity are preferably measured at ordinary temperature (20 to 25°C).

The shape of the mold cavity for use in injection molding of the flame-retardant synthetic resin composition is not particularly limited, examples thereof include a rectangular shape, a circular shape, an oblong shape, a polygonal shape, a columnar shape, a cone shape and a deformed shape, and the shape is preferably a symmetric shape from the viewpoint that measurement of the lengths in the MD direction and the TD direction is accurately performed.

The mold shrinkage factor and the longitudinal and lateral balance of a molded body formed from the flame-retardant synthetic resin composition of the present invention are respectively close to the mold shrinkage factor and the longitudinal and lateral balance of a molded body formed from the base resin, and thus a molded body close in shape to the molded body formed from the base resin can be obtained even when the flame-retardant synthetic resin composition of the present invention is molded with a mold designed for molding the base resin.

<Molded body>

The molded body of the present invention is obtained by molding the flame-retardant synthetic resin composition of the present invention, preferably such a flame-retardant synthetic resin composition using the thermoplastic resin. The molding method and molding conditions thereof are not particularly limited, and a known molding method and known molding conditions can be used. Specific molding methods include extrusion processing, calendar processing, injection molding, rolling, vacuum molding, compressed-air molding, compression molding, blow molding, and rotational molding, and preferably include molding by injection molding from the viewpoint of the effects of the present invention. Examples of the shape of the molded body of the present invention include various shapes of, for example, a resin plate or sheet, a film, a bottle, a fiber, and a deformed product.

The flame-retardant synthetic resin composition and the molded body thereof, of the present invention, can be used in a wide range of industrial fields, for example, electric/electronic/communication, agriculture, forestry and fisheries, mining, construction, foods, fibers, clothing, medical care, coal, petroleum, rubber, leather, automobiles, delicate equipment, wood materials, building materials, civil engineering, furniture, printing, and instruments, and are more specifically used in applications of office supplies and office automation equipment such as a printer, a personal computer, a word processor, a keyboard, a PDA (personal digital assistant), a telephone, a copy machine, a facsimile machine, an ECR (electronic cash register), an electronic calculator, an electronic organizer, a card, a holder and stationary, household electric appliances such as a washing machine, a refrigerator, a vacuum cleaner, a microwave oven, a luminaire, a gaming console, an iron and a Japanese table heater, audiovisual equipment such as a television, a videotape recorder, a video camera, a radio-cassette recorder, a tape recorder, a mini disc, a CD player, a speaker and a liquid crystal display, electric and electronic components, and communication equipment such as a connector, a relay, a capacitor, a switch, a printed-circuit board, a coil bobbin, a semiconductor sealing material, an LED sealing material, an electric wire, a cable, a transformer, a deflection yoke, a distribution switch board and a clock, housings (a frame, a casing, a cover and an exterior component) and components for office automation equipment, and automobile interior and exterior materials.

The flame-retardant synthetic resin composition and the molded body thereof, of the present invention, can be used in various applications of, for example, automobile, hybrid car, electric vehicle, vehicle, vessel, aircraft, building, house, and construction materials, and civil engineering materials, such as a seat (padding, surface material, or the like), a belt, a ceiling covering, a convertible top cover, an armrest, a door trim, a rear package tray, a carpet, a mat, a sun visor, a wheel cover, a mattress cover, an airbag, an insulating material, a strap hanger, a strap hanger belt, an electric wire coating material, an electric insulating material, a paint, a coating material, a covering material, a floor material, a corner wall, a carpet, a wall paper, a wall covering material, an exterior material, an interior material, a roofing material, a decking material, a wall material, a post material, a floor plate, a fence material, a framework and a molding, a window and a door forming material, a shingle, a panel, a terrace, a balcony, a sound insulation plate, a heat insulation plate, and a window material, and houseware goods and sporting goods such as a cloth, a curtain, a bedsheet, a plywood board, a synthetic fiber plate, a rug, a door mat, a sheet, a bucket, a hose, a container, a pair of glasses, a bag, a case, a pair of goggles, a pair of skis, a racket, a tent, and a music instrument.

Examples

Hereinafter, the present invention will be specifically shown with reference to Examples. It is noted that the present invention is not limited to the following Examples at all. In the following Examples, the amount of each component compounded is based on part(s) by mass, unless particularly described.

[Examples 1 to 8 and Comparative Examples 1 to 7]

Each resin composition (Examples 1 to 6) including the flame retardant composition of the present invention and each comparative resin composition (Comparative Examples 1 to 7) were produced by the following method. Example 7 and 8 are not flame retardant compositions of the claimed invention.

<Production of impact copolymer resin composition pellet>

A pellet was produced by adding and mixing 0.1 parts by mass of a phenolic antioxidant (tetrakis[3-(3,5-di-tert-butyl-4-hydroxyphenyl)propionyloxymethyl]methane, trade name "ADK STAB AO-60" manufactured by ADEKA CORPORATION), 0.1 parts by mass of a phosphorus-based antioxidant (tris(2,4-di-tert-butylphenyl)phosphite, trade name "ADK STAB 2112" manufactured by ADEKA CORPORATION), 0.1 parts by mass of a neutralizer (calcium stearate), and each compound in a compounding amount described in Tables described below, to and with an impact copolymer polypropylene resin (Prime Polypro J-754HP, manufactured by Prime Polymer Co., Ltd., melt flow rate 14 g/10 min) in an amount adjusted so that the total amount of the entire resin composition was 100 parts by mass, and melting and kneading the resulting mixture in a twin screw extruder (apparatus: manufactured by JAPAN STEEL WORKS LTD., TEX25αIII, extrusion temperature: 220°C, rotating speed of screw: 150 rpm). The pellet obtained was dried at 60°C for 8 hours, and then evaluated about flame retardance and shrinkage isotropy according to testing methods described below. These results are shown in Tables described below.

<UL-94V flame retardance test>

The pellet obtained by the above procedure was used, and was subjected to injection molding by an injection molding machine (EC60NII-1.5A; manufactured by Toshiba Machine Co., Ltd.) in conditions of a resin temperature of 220°C, and a mold temperature of 50°C, to produce a test piece having a length of 127 mm, a width of 12.7 mm and a thickness of 1.6 mm. The test piece was vertically secured, a lower end thereof was contacted with flame from a burner for 10 seconds, thereafter the flame was removed, and thus the time until flame on the test piece was extinguished was measured. Next, the second flame contact was performed for 10 seconds at the same time as the extinguishing of flame, and the time until flame was extinguished was measured in the same manner as in the first flame contact. Whether or not cotton below the test piece was ignited due to falling fire was also simultaneously evaluated.

The combustion rank was rated from, for example, the respective combustion times and the occurrence of cotton ignition, after the first flame contact and after the second flame contact, according to the UL-94V standard. V-0 corresponds to the highest combustion rank, and flame retardance is deteriorated in the order of V-1 and V-2. One not corresponding to any of V-0 to V-2 ranks was rated as NR (No Rating).

<Evaluation of shrinkage balance during molding>

The pellet obtained by the above procedure was used, and was subjected to injection molding by an injection molding machine (EC60NII-1.5A; manufactured by Toshiba Machine Co., Ltd.) in the following conditions, to produce a test piece.

Resin temperature: 220°C.
Mold temperature: 50°C.
Injection time: 15 seconds.
Cooling time: 25 seconds.
Filling speed: 25 mm/s.
Pressure keeping: 20 MPa.

The test piece was left to still stand in a thermostat at 23°C and at a humidity of 50% for 48 hours, thereafter each of the lengths in the MD direction and the TD direction thereof was measured in terms of dimension at three points, and the respective average values were defined as the dimension ($MD_1$) in the MD direction and the dimension ($TD_1$) in the TD direction of the test piece. An image measurement machine "Quick Vision ELF" manufactured by Mitutoyo Corporation was used for such length measurement.

The mold cavity used in molding had a square shape, the dimension ($MD_0$) in the MD direction was 60.02 mm, the dimension ($TD_0$) in the TD direction was 60.03 mm, and the thickness was 2.0 mm. Each of the lengths in the MD direction and the TD direction of the mold cavity was measured by using a caliper.

The shrinkage factors ΔMD and ΔTD of the test piece were determined according to the following expressions:

$$\Delta MD\ (\%) = [(MD_0-MD_1)/MD_0] \times 100$$

$$\Delta TD\ (\%) = [(TD_0-TD_1)/TD_0] \times 100$$

The respective shrinkage factors ΔMD and ΔTD of the base resin (Comparative Example 1) not containing the flame retardant composition of the present invention were defined as $\Delta MD_B$ and $\Delta TD_B$. The evaluation results in Comparative Example 1 were as follows: $\Delta MD_B$ = 1.72 and $\Delta TD_B$ = 1.78.

ΔTD obtained was normalized under the assumption that the measurement value $\Delta TD_B$ of the base resin (Comparative Example 1) not containing the flame retardant composition of the present invention was 1. The numerical value normalized is represented by $\Delta TD/\Delta TD_B$.

ΔMD and ΔTD obtained were plugged in the following expression to calculate the shrinkage isotropy.

$$\text{Shrinkage isotropy} = \Delta TD/\Delta MD$$

The numerical value ΔTD/ΔMD of the shrinkage isotropy obtained was normalized under the assumption that the numerical value $\Delta TD_B/\Delta MD_B$ of the shrinkage isotropy of the base resin (Comparative Example 1) not containing the flame retardant composition of the present invention was 1. The numerical value normalized is represented by $(\Delta TD/\Delta MD)/(\Delta TD_B/\Delta MD_B)$.

[Table 1]

| | | | Example 1 | Example 2 | Example 3 | Example 4 | Example 5 | Example 6 | Example 7 | Example 8 |
|---|---|---|---|---|---|---|---|---|---|---|
| Flame retardant composition (parts by mass) | Component (A) | Component (A-1) Melamine pyrophosphate | 11.2 | 11.2 | 8 | 14.4 | 11.2 | 11.2 | 11.2 | 11.2 |
| | | Component (A-2) Piperazine pyrophosphate | 16.8 | 16.8 | 12 | 21.6 | 16.8 | 16.8 | 16.8 | 16.8 |
| | Component (B) | Compound No. 2 | 0.1 | 0.2 | 0.2 | 0.2 | | | | |
| | | Compound No. 13 | | | | | 0.07 | 0.14 | | |
| | | Compound No. 8 | | | | | | | 0.075 | 0.15 |
| | Component (C) | Sodium stearate | | | | | 0.03 | 0.06 | 0.025 | 0.05 |
| Evaluation results | Rank of evaluation in UL-94V flame retardance test | | V-0 | V-0 | V-2 | V-0 | V-0 | V-0 | V-0 | V-0 |
| | △MD (%) | | 1.88 | 1.88 | 1.86 | 1.94 | 1.89 | 1.89 | 1.87 | 1.89 |
| | △TD (%) | | 1.72 | 1.74 | 1.74 | 1.75 | 1.71 | 1.72 | 1.69 | 1.71 |
| | $\triangle TD/\triangle TD_B$(-) | | 0.966 | 0.978 | 0.978 | 0.983 | 0.961 | 0.966 | 0.949 | 0.961 |
| | △TD/△MD(-) | | 0.915 | 0.926 | 0.935 | 0.902 | 0.905 | 0.910 | 0.904 | 0.905 |
| | $(\triangle TD/\triangle MD)/(\triangle TD_B/\triangle MD_B)$(-) | | 0.884 | 0.895 | 0.903 | 0.871 | 0.874 | 0.879 | 0.873 | 0.874 |

[Table 2]

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Flame retardant composition (parts by mass) | Component (A) | Component (A-1) Melamine pyrophosphate | | 8 | 11.2 | 14,4 | | | |
| | | Component (A-2) Piperazine pyrophosphate | | 12 | 16.8 | 21.6 | | | |
| | Component (B) | Compound No. 2 | | | | | 0.1 | | |
| | | Compound No. 13 | | | | | | 0.07 | |
| | | Compound No. 8 | | | | | | | 0.075 |
| | Component (C) | Sodium stearate | | | | | | 0.03 | 0.025 |
| Evaluation results | Rank of evaluation in UL-94V flame retardance test | | NR | V-2 | V-0 | V-0 | NR | NR | NR |
| | △MD (%) | | 1.72 | 1.88 | 1.89 | 1.96 | 1.88 | 1.88 | 1.93 |
| | △TD (%) | | 1.78 | 1.66 | 1.61 | 1.52 | 2.02 | 2.00 | 2.07 |
| | $\triangle TD/\triangle TD_B$(-) | | 1.000 | 0.933 | 0.904 | 0.854 | 1.135 | 1.124 | 1.163 |
| | △TD/△MD(-) | | 1.035 | 0.883 | 0.852 | 0.776 | 1.074 | 1.064 | 1.073 |
| | $(\triangle TD/\triangle MD)/(\triangle TD_B/\triangle MD_B)$(-) | | 1.000 | 0.853 | 0.823 | 0.750 | 1.038 | 1.028 | 1.037 |

As shown in the Tables above, each composition of Examples 1 to 8, while maintained any evaluation rank of flame retardance, achieved values close to 1 as the ratio ($\Delta TD/\Delta TD_B$) of the shrinkage factor ΔTD relative to that of the base resin and the ratio ($(\Delta TD/\Delta MD)/(\Delta TD_B/\Delta MD_B)$) of ΔTD/ΔMD relative to that of the base resin, as compared with each composition (Comparative Examples 2 to 4) containing no component (B), and was favorable in longitudinal and lateral balance in terms of mold shrinkage factor during injection molding.

Each composition (Comparative Examples 1 and 5 to 7) containing no component (A) was rated as NR in terms of evaluation rank in the flame retardance test, and resulted in flame retardance impaired as compared with each composition of Examples.

It has been confirmed from the foregoing that the flame retardant composition of the present invention can be suitably used as a flame retardant for resins because the flame retardant composition of the present invention can impart excellent flame retardance to a synthetic resin and a molded body using a flame-retardant resin composition using the flame retardant composition is good in longitudinal and lateral balance in terms of mold shrinkage factor in comparison with a molded body made of the base resin.

## Claims

1. A flame retardant composition comprising 0.005 to 5 parts by mass of the following component (B) based on 100 parts by mass of the following component (A), wherein component (A) is phosphoric acid salt-based flame retardant, and component (B) is one or more compounds each having a structure represented by the following general formula (1):

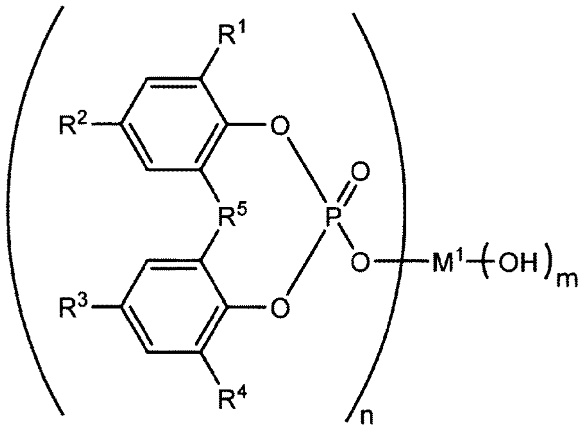

(1)

where $R^1$, $R^2$, $R^3$ and $R^4$ each independently represent a hydrogen atom or an alkyl group having 1 to 8 carbon atoms,
$R^5$ represents a direct bond or an alkanediyl group having 1 to 4 carbon atoms,
$M^1$ represents lithium or aluminum,
n is 1 and m is 0 when $M^1$ represents lithium, and
n is 1, 2 or 3 and m is an integer represented by 3 - n when $M^1$ represents aluminum, wherein component (A) contains components (A-1) and (A-2):

component (A-1): one or more melamine salts selected from the group consisting of melamine orthophosphate, melamine pyrophosphate and melamine polyphosphate;
component (A-2): one or more piperazine salts selected from the group consisting of piperazine orthophosphate, piperazine pyrophosphate and piperazine polyphosphate, and the content ratio (mass ratio) between components (A-1) and (A-2) is 30:70 to 45:55.

2. The flame retardant composition according to claim 1, further comprising at least one selected from a filler, a fatty acid metal salt and a hydrotalcite compound, as component (C).

3. The flame retardant composition according to claim 2, wherein the fatty acid metal salt is a compound having a structure represented by the following general formula (2):

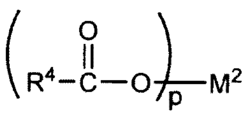

(2)

where $R^4$ represents a group derived from a linear or branched aliphatic organic acid having 8 to 30 carbon atoms, $M^2$ represents a metal atom or $Al(OH)_{3-p}$, and p represents an integer of 1 to 3.

4. The flame retardant composition according to claim 1, further comprising 0.01 to 5 parts by mass of at least one selected from the group consisting of silicone oil, an epoxy-based coupling agent and a lubricant based on 100 parts

by mass of component (A), as component (E).

5. A flame-retardant synthetic resin composition comprising a synthetic resin and the flame retardant composition according to claim 1, and satisfying relationships represented by the following expressions (i) and (ii):

$$\text{(i) } 0.935 \leq \Delta TD/\Delta TD_B \leq 1.065$$

$$\text{(ii) } 0.860 \leq (\Delta TD/\Delta MD)/(\Delta TD_B/\Delta MD_B) \leq 1.140,$$

in the expressions, $\Delta MD$ is a shrinkage factor in an MD direction as a flow direction of a resin in a mold cavity during injection molding, of a molded body obtained by injection molding of the flame-retardant synthetic resin composition, $\Delta TD$ is a shrinkage factor in a TD direction as a direction perpendicular to the MD direction, of the molded body obtained by injection molding of the flame-retardant synthetic resin composition, $\Delta MD_B$ is a shrinkage factor in the MD direction, of a molded body obtained by injection molding of a synthetic resin composition having a compositional ratio where the flame retardant composition is excluded from the flame-retardant synthetic resin composition, and $\Delta TD_B$ is a shrinkage factor in the TD direction, of the molded body obtained by injection molding of the synthetic resin composition.

6. A molded body obtained by molding the flame-retardant synthetic resin composition according to claim 5.

**Patentansprüche**

1. Flammschutzmittelzusammensetzung, umfassend 0,005 bis 5 Masseteile der folgenden Komponente (B) auf Grundlage von 100 Masseteilen der folgenden Komponente (A), wobei Komponente (A) ein auf Phosphorsäuresalz basierendes Flammschutzmittel ist und
Komponente (B) eine oder mehrere Verbindungen mit einer Struktur ist, die durch die folgende allgemeine Formel (1) dargestellt ist:

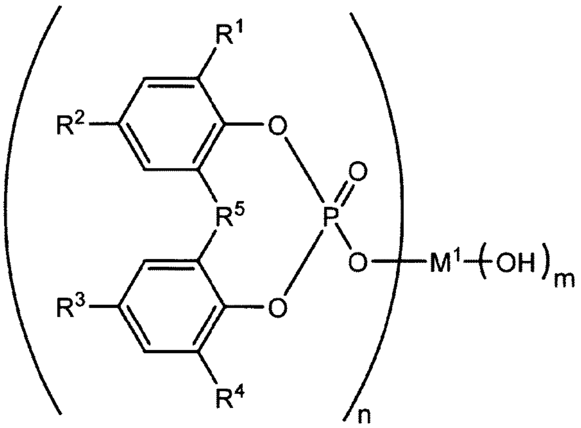

(1)

wobei $R^1$, $R^2$, $R^3$ und $R^4$ jeweils unabhängig voneinander ein Wasserstoffatom oder eine Alkylgruppe mit 1 bis 8 Kohlenstoffatomen darstellen,
$R^5$ eine direkte Bindung oder eine Alkandiylgruppe mit 1 bis 4 Kohlenstoffatomen darstellt,
$M^1$ Lithium oder Aluminium darstellt,
n 1 ist und m 0 ist, wenn $M^1$ Lithium darstellt, und
n 1, 2 oder 3 ist und m eine ganze Zahl ist, die durch 3 - n dargestellt wird, wenn $M^1$ Aluminium darstellt, wobei die Komponente (A) die Komponenten (A-1) und (A-2) enthält:

Komponente (A-1): ein oder mehrere Melaminsalze, ausgewählt aus der Gruppe, bestehend aus Melaminorthophosphat, Melaminpyrophosphat und Melaminpolyphosphat;
Komponente (A-2): ein oder mehrere Piperazinsalze, ausgewählt aus der Gruppe, bestehend aus Piperazinorthophosphat, Piperazinpyrophosphat und Piperazinpolyphosphat, und das Gehaltsverhältnis (Massenverhältnis) zwischen den Komponenten (A-1) und (A-2) 30 : 70 bis 45 : 55 beträgt.

2. Flammschutzmittelzusammensetzung nach Anspruch 1, die ferner als Komponente (C) wenigstens einen umfasst, der aus einem Füllstoff, einem Fettsäuremetallsalz und einer Hydrotalcitverbindung ausgewählt ist.

3. Flammschutzmittelzusammensetzung nach Anspruch 2, wobei das Fettsäuremetallsalz eine Verbindung mit einer Struktur ist, die durch die folgende allgemeine Formel (2) dargestellt wird:

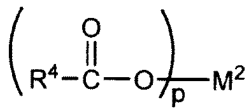 (2)

wobei $R^4$ eine Gruppe darstellt, die von einer linearen oder verzweigten aliphatischen organischen Säure mit 8 bis 30 Kohlenstoffatomen abgeleitet ist, $M^2$ ein Metallatom oder $Al(OH)_{3-p}$ darstellt und p eine ganze Zahl von 1 bis 3 darstellt.

4. Flammschutzmittelzusammensetzung nach Anspruch 1, ferner umfassend 0,01 bis 5 Masseteile von wenigstens einem, ausgewählt aus der Gruppe, bestehend aus Silikonöl, einem epoxidharzbasierten Kupplungsmittel und einem Schmiermittel, auf Grundlage von 100 Masseteilen der Komponente (A), als Komponente (E).

5. Flammenschutzmittelkunstharzzusammensetzung, umfassend ein Kunstharz und die Flammschutzmittelzusammensetzung nach Anspruch 1, und die die durch die folgenden Ausdrücke (i) und (ii) dargestellten Beziehungen erfüllt:

$$\text{(i)}\ 0{,}935 \leq \Delta TD / \Delta TD_B \leq 1{,}065$$

$$\text{(ii)}\ 0{,}860 \leq (\Delta TD / \Delta MD) / (\Delta TD_B / \Delta MD_B) \leq 1{,}140,$$

wobei in den Ausdrücken $\Delta MD$ ein Schrumpfungsfaktor in einer MD-Richtung als eine Fließrichtung eines Harzes in einer Formkavität während des Spritzgießens eines Formkörpers ist, der durch Spritzgießen der Flammenschutzmittelkunstharzzusammensetzung erhalten wurde, $\Delta TD$ ein Schrumpfungsfaktor in einer TD-Richtung als eine Richtung senkrecht zu der MD-Richtung des Formkörpers ist, der durch Spritzgießen der Flammenschutzmittelkunstharzzusammensetzung erhalten wurde, $\Delta MD_B$ ein Schrumpfungsfaktor in der MD-Richtung eines Formkörpers ist, der durch Spritzgießen einer Kunstharzzusammensetzung mit einem Zusammensetzungsverhältnis erhalten wurde, bei dem die Flammenschutzmittelzusammensetzung aus der Flammenschutzmittelkunstharzzusammensetzung ausgeschlossen ist, und $\Delta TD_B$ ein Schrumpfungsfaktor in der TD-Richtung des Formkörpers ist, der durch Spritzgießen der Kunstharzzusammensetzung erhalten wurde.

6. Formkörper, der durch Formen der Flammenschutzmittelkunstharzzusammensetzung nach Anspruch 5 erhalten wird.

**Revendications**

1. Composition ignifuge comprenant 0,005 à 5 parties en masse du composant (B) ci-après sur la base de 100 parties en masse du composant (A) ci-après, dans laquelle le composant (A) est un agent ignifuge à base d'acide phosphorique, et le composant (B) est un ou plusieurs composés chacun ayant une structure représentée par la formule générale ci-après (1) :

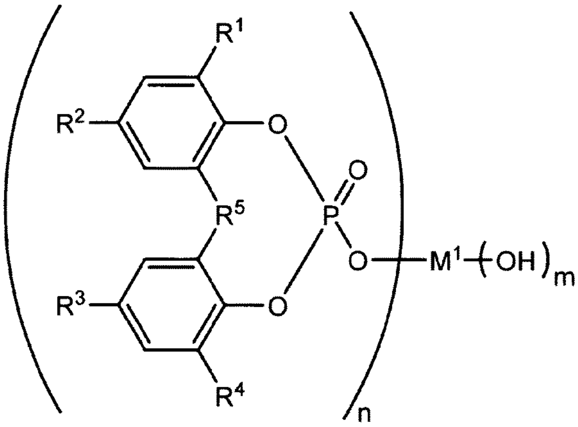

(1)

où $R^1$, $R^2$, $R^3$ et $R^4$ représentent chacun indépendamment un atome d'hydrogène ou un groupe alkyle ayant 1 à 8 atomes de carbone,
$R^5$ représente une liaison directe ou un groupe alcanediyle ayant 1 à 4 atomes de carbone,
$M^1$ représente un lithium ou un aluminium,
n est 1 et m est 0 quand $M^1$ représente un lithium, et
n est 1, 2 ou 3 et m est un nombre entier représenté par 3 - n quand $M^1$ représente un aluminium, dans laquelle le composant (A) contient des composants (A-1) et (A-2) :

le composant (A-1) : un ou plusieurs sels de mélamine sélectionnés dans le groupe constitué d'orthophosphate de mélamine, pyrophosphate de mélamine et polyphosphate de mélamine ;
le composant (A-2) : un ou plusieurs sels de pipérazine sélectionnés dans le groupe constitué d'orthophosphate de pipérazine, pyrophosphate de pipérazine et polyphosphate de pipérazine, et le rapport en teneur (rapport en masse) entre les composants (A-1) et (A-2) est 30:70 à 45:55.

2. Composition ignifuge selon la revendication 1, comprenant en outre un ou plusieurs éléments sélectionnés parmi une charge, un sel métallique d'acide gras et un composé hydrotalcite, étant le composant (C).

3. Composition ignifuge selon la revendication 2, dans laquelle le sel métallique d'acide gras est un composé ayant une structure représentée par la formule générale (2) ci-après :

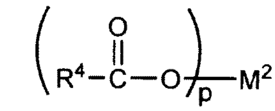

(2)

où $R^4$ représente un groupe dérivé d'un acide organique aliphatique linéaire ou ramifié ayant 8 à 30 atomes de carbone, $M^2$ représente un atome de métal ou $Al(OH)_{3-p}$ et p représente un nombre entier de 1 à 3.

4. Composition ignifuge selon la revendication 1, comprenant en outre 0,01 à 5 parties en masse d'un ou plusieurs éléments sélectionnés dans le groupe constitué d'huile de silicone, d'un agent de couplage à base d'époxy et d'un lubrifiant sur la base de 100 parties en masse du composant (A), étant le composant (E).

5. Composition de résine synthétique résistante aux flammes comprenant une résine synthétique et la composition ignifuge selon la revendication 1, et satisfaisant aux relations représentées par les expressions ci-après (i) et (ii) :

$$\text{(i) } 0{,}935 \leq \Delta TD/\Delta TD_B \leq 1{,}065$$

$$\text{(ii) } 0{,}860 \leq (\Delta TD/\Delta MD)/(\Delta TD_B/\Delta MD_B) \leq 1{,}140,$$

dans les expressions, $\Delta MD$ est un facteur de retrait dans une direction MD étant une direction d'écoulement d'une résine dans une cavité de moulage pendant le moulage par injection, d'un corps moulé obtenu par moulage par injection de la composition de résine synthétique résistante aux flammes, $\Delta TD$ est un facteur de retrait dans une

direction TD étant une direction perpendiculaire à la direction MD, du corps moulé obtenu par moulage par injection de la composition de résine synthétique résistante aux flammes, $\Delta MD_B$ est un facteur de retrait dans la direction MD, d'un corps moulé obtenu par moulage par injection d'une composition de résine synthétique ayant un rapport compositionnel où la composition ignifuge est exclue de la composition de résine synthétique résistante aux flammes, et $\Delta TD_B$ est un facteur de retrait dans la direction TD, du corps moulé obtenu par moulage par injection de la composition de résine synthétique.

**6.** Corps moulé obtenu par moulage de la composition de résine synthétique résistante aux flammes selon la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20030088000 A
- US 20050256234 A
- US 20070176154 A
- JP 2008208269 A
- EP 3424993 A1
- WO 2019045013 A1
- JP S462280 B
- JP S5030039 B
- JP S5129129 B
- JP H336839 B
- JP S61174270 A
- JP H5179052 A